# EUROPÄISCHE PATENTANMELDUNG

(11) **EP 1 314 918 A1**
(43) Veröffentlichungstag der Anmeldung: **28.05.2003**
(21) Anmeldenummer: 02026032.9
(22) Anmeldetag: 21.11.2002
(51) Int. Cl.: F16J 15/22, F16J 15/46

(54) **Dichtschnur und daraus bestehende Dichtungspackung**

(30) Priorität: 22.11.2001 DE 10157297
(71) Anmelder: BHS-Sonthofen Maschinen- und Anlagenbau GmbH, 87527 Sonthofen (DE); Propack Dichtungen & Packungen GmbH, 82054 Sauerlach (DE)
(72) Erfinder: Schmid, Hans-Peter, 87545 Burgberg (DE); Steidl, Detlef, 87545 Burgberg (DE); Maurer, Jürgen, 87509 Immenstadt (DE); Cleff, Thomas, 82024 Taufkirchen (DE); Kindermann, Siegfried, 85521 Ottobrunn (DE)
(74) Vertreter: Herzog, Markus, Dipl.-Phys. Dr.

(57) **Zusammenfassung**

Die Erfindung betrifft eine Dichtschnur (10) zur Abdichtung von Wellen (14) oder anderen bewegbaren Maschinen- und Anlagenteilen, wie Schieber, Klappen, Gehäuse und dergleichen, insbesondere bei Rührwerken, Mischern, Trocknern, Filtern und Deckelabdichtungen mit einem ein elastisch verformbares Hohlprofil (26) aufweisenden Kern (24), wobei das Hohlprofil (26) wenigstens eine Kammer (26) umfasst, und mit einer den Kern (24) umschließenden Umflechtung (28). Erfindungsgemäß ist die wenigstens eine Kammer (26) mit wenigstens einem Anschluss (30) zur Zufuhr oder/und Abfuhr von Druckfluid (32) ausgestattet.

## Beschreibung

Die Erfindung betrifft eine Dichtschnur zur Abdichtung von Wellen oder anderen bewegbaren Maschinen- und Anlagenteilen, wie Schieber, Klappen, Gehäuse und dergleichen, insbesondere bei Rührwerken, Mischern, Trocknern; Filtern und Deckelabdichtungen mit einem ein elastisch verformbares Hohlprofil aufweisenden Kern, wobei das Hohlprofil wenigstens eine Kammer umfasst, und mit einer den Kern umschließenden Umflechtung.

Eine derartige Dichtschnur ist beispielsweise aus der DE 195 32 795 A1 bekannt, die auf eine der Anmelderinnen der vorliegenden Anmeldung zurückgeht und deren Offenbarung hiermit zur Ergänzung der Offenbarung der vorliegenden Anmeldung ausdrücklich in Bezug genommen wird.

Der von einem Hohlraum gebildete Kern dieser bekannten Dichtschnur dient neben der Abdichtung auch zur Aufnahme größerer Relativbewegungen der beiden gegeneinander abzudichtenden Teile, beispielsweise einer Welle relativ zu ihrem Lager, in einer zu den Anlageflächen der Dichtschnur an den beiden Teilen im Wesentlichen orthogonalen Richtung. Und zwar wird der Kern hierzu unter Zusammendrücken der Kammer elastisch verformt, wobei sich aber seine Umfangslänge im Wesentlichen nicht ändert. Zur Herstellung einer Dichtungspackung wird eine Mehrzahl derartiger Dichtschnüre hintereinander in einen Packungsraum eingelegt und anschließend durch Anziehen einer Packungsbrille in einer Zustellrichtung komprimiert, bis die gewünschte Dichtwirkung erzielt ist. Das Nachstellen der Packungsbrille, beispielsweise zum Zwecke des Ausgleichs eines Reibverschleißes an den Dichtschnüren, wird bei derartigen Dichtungspackungen häufig durch Anbauten an den gegeneinander abzudichtenden Teilen erschwert. Noch schwieriger ist der Austausch einer verschlissenen Dichtungspackungen gegen eine neue Dichtungspackung.

Von Anwendungsfällen, bei denen lediglich eine stationäre Abdichtung gefordert ist, beispielsweise der Abdichtung von Luken und den sie verschließenden Deckeln, ist grundsätzlich auch der Einsatz aufblasbarer Schlauchdichtungen bekannt.

Zum Stand der Technik sei ergänzend noch auf folgende Druckschriften verwiesen: FR-A-1 377 982, FR-A-2 087 356, DE-C-18 970, DE-C-2 293, DE-B-12 17 716, US-A-1 076 282, US-A-1 150 050, US-A-1 313 201, US-A-1 733 880, US-A-1 946 527.

Demgegenüber ist es Aufgabe der Erfindung, eine Dichtschnur der eingangs genannten Art anzugeben, welche eine einfache Herstellung und Nachstellung der Dichtungswirkung dieser Dichtschnur in einer Dichtungspackung ermöglicht.

Diese Aufgabe wird erfindungsgemäß durch eine gattungsgemäße Dichtschnur gelöst, bei welcher die wenigstens eine Kammer mit wenigstens einem Anschluss zur Zufuhr oder/und Abfuhr von Druckfluid ausgestattet ist.

Zur Montage einer Dichtungspackung unter Verwendung der erfindungsgemäßen Dichtschnur braucht diese lediglich in den dafür vorgesehenen Packungsraum eingelegt und dieser anschließend mittels eines Deckels verschlossen zu werden. Dabei muss dieser Deckel nicht nach Art einer Packungsbrille verstellbar ausgebildet sein. Grundsätzlich ist es sogar möglich, an den Einsatz von deckelfreien Packungsräumen zu denken, und zwar dann, wenn der Packungsraum eine besondere Zugänglichkeit aufweist, beispielsweise nach Herausziehen der Welle aus ihrem Lager.

Anschließend wird der wenigstens einen Druckkammer der Dichtschnur über den dafür vorgesehenen Anschluss Druckfluid zugeführt, woraufhin das elastisch verformbare Hohlprofil expandiert, bis die gewünschte Dichtungswirkung erzielt ist. Auch auf einen Verschleiß der Dichtschnur kann einfach durch weitere Druckfluidzufuhr reagiert werden, wobei dieser Verschleißausgleich auch bei laufender Anlage durchgeführt werden kann.

Ein weiterer Vorteil ist in Folgendem zu sehen: Bei axialer Hintereinanderanordnung einer Mehrzahl erfindungsgemäßer Dichtschnüre, beispielsweise zur Abdichtung einer Welle, musste herkömmlich der von der Packungsbrille ausgeübte Druck in axialer Richtung von Dichtschnur zu Dichtschnur weitergegeben werden. Dies hatte zwangsläufig eine Abnahme der Dichtungswirkung von der der Packungsbrille nächstgelegenen Dichtschnur zu der von der Packungsbrille ferngelegensten Dichtschnur zur Folge. Erfindungsgemäß kann hingegen jeder Dichtschnur gesondert Druckfluid zugeführt werden, so dass jede der Dichtschnüre ihre Dichtungswirkung unabhängig von ihrer Position in der Dichtungspackung allein in Abhängigkeit des ihr zugeführten Fluidddrucks voll entfalten kann.

Festzuhalten ist, dass das elastisch verformbare Hohlprofil der erfindungsgemäßen Dichtschnur zur Herstellung der Dichtwirkung infolge der Druckfluidzufuhr expandiert, d.h. die Umfangslänge der Dichtschnur nimmt infolge der Druckfluidzufuhr zu. Eine derartige Expansion war bislang bei gattungsgemäßen Hohlprofilen nicht in Betracht gezogen worden, da das Hohlprpfil hierbei stets fest in die Umflechtung eingebettet war und die für die Umflechtung üblicherweise verwendeten und aufgrund ihrer Dichtungsund Gleiteigenschaften nicht ohne Weiteres austauschbaren Materialien über keine praktisch nutzbare Elastizität verfügen. Lediglich beispielhaft sei auf Kohlenstoff-Fasern und Teflon verwiesen. Überraschenderweise hat sich jedoch gezeigt, dass durch geeignete Wahl des Geflechts, d.h. die Art der Flechtung, und soweit möglich auch durch geeignete Materialwahl eine begrenzte, für die erfindungsgemäßen Zwecke aber ausreichende Dehnbarkeit der Umflechtung bereitgestellt werden kann.

Die Wahl der Querschnittsgestalt der erfindungsgemäßen Dichtschnur kann in Abhängigkeit des jeweiligen Anwendungsfalles getroffen werden. Insbesondere kann die Dichtschnur einen quadratischen, rechteckigen, trapezförmigen, runden oder ovalen Querschnitt aufweisen. Aber auch andere Formen sind möglich, beispielsweise ein flach-ovaler Querschnitt, wie er beispielsweise von Feuerwehrschläuchen her bekannt ist.

Insbesondere für Dichtschnüre mit eckigem Querschnitt wird vorgeschlagen, dass die Begrenzungswandung der wenigstens einen Druckkammer in einem im Wesentlichen orthogonalen Querschnitt zumindest abschnittsweise zu Druckkammer hin konvex ist. Durch die Streckung und ggf. auch Dehnung des konvexen Wandungsabschnitts in Folge der Expansion des elastisch verformbaren Hohlprofils kann die Dichtungswirkung vor allem in den den Enden des konvexen Abschnitts zugeordneten Bereichen verstärkt werden. Man wird diese Bereiche daher vorzugsweise den dichtungskritischen Ecken des Dichtschnur-Querschnitts zuordnen.

Selbstverständlich kann auch das Hohlprofil jede beliebige, die Dichtungswirkung, insbesondere bei Expansion nach Druckfluid-Zufuhr, unterstützende Querschnittsgestalt aufweisen.

Zur Erhöhung der Dichtungswirkung in dichtungskritischen Bereichen kann zusätzlich oder alternativ aber auch vorgesehen sein, dass über den Querschnitt der Dichtschnur eine Mehrzahl von Druckkammern verteilt angeordnet ist. Dabei kann diese Mehrzahl von Druckkammern sowohl in einer Mehrzahl von Hohlprofilen ausgebildet sein, die gemeinsam umflochten ist, als auch in einem einzigen Hohlprofil ausgebildet sein. Auch eine Kombination dieser beiden Möglichkeiten ist grundsätzlich denkbar.

Um eine möglichst gleichmäßige Druckverteilung erreichen zu können, wird vorgeschlagen, dass dann, wenn die Dichtschnur einen in sich geschlossenen, endlosen Verlauf nimmt, wie dies beispielsweise bei der Abdichtung von Wellen der Fall ist, die wenigstens eine Kammer eine in sich geschlossene Ringkammer ist. Grundsätzlich ist es jedoch auch möglich, dass längs dieses endlosen Verlaufs eine Mehrzahl von voneinander getrennten, separaten Kammern vorgesehen ist. Mittels dieser letztgenannten Ausführungsalternative kann auch ein über die Länge der Dichtschnur variierendes Druck- bzw. Dichtungsprofil erhalten werden.

In einer einfachen und kostengünstig herstellbaren Ausführungsform kann die wenigstens eine Druckkammer zur Zufuhr und Abfuhr von Druckfluid einen gemeinsamen Anschluss aufweisen. Alternativ ist es jedoch ebenso möglich, dass die wenigstens eine Druckkammer zur Zufuhr und Abfuhr von Druckfluid jeweils einen gesonderten Anschluss aufweist. Diese letztgenannte Ausführungsalternative hat den weiteren Vorteil, dass das Druckfluid die Druckkammer durchströmt und der Druck folglich dynamisch und somit besonders feinfühlig gesteuert bzw. geregelt werden kann. Zudem ermöglicht diese Ausführungsform es, das Druckfluid gleichzeitig als Kühlfluid einzusetzen, was im günstigsten Fall sogar eine Erhöhung der zulässigen Gleitgeschwindigkeit zwischen der Dichtschnur und dem abzudichtenden Teil erlaubt.

In Weiterbildung der Erfindung kann die Dichtschnur einer Pumpe zugeordnet sein, welche der wenigstens einen Druckkammer das Druckfluid unter Druck zuführt. Darüber hinaus können zur Steuerung der Zufuhr oder/und Abfuhr von Druckfluid Ventile umfassende Steuerungsmittel vorgesehen sein. Als Druckfluid kann beispielsweise Stickstoffgas eingesetzt werden. Im Hinblick auf den Einsatz des Druckfluids als Kühlfluid können im Hinblick auf deren höheres Wärmeaufnahmevermögen auch flüssige Medien zum Einsatz kommen.

Schließlich kann die erfindungsgemäß gewünschte Expansibilität durch die Fertigung des elastisch verformbaren Hohlprofils aus Silicon oder/und EPDM oder/und Viton oder/und Polyethylen oder/und Polypropylen oder/und Polytetrafluorethylen erzielt werden.

Die Erfindung betrifft darüber hinaus auch eine eine Mehrzahl erfindungsgemäßer Dichtschnüre umfassende Dichtungspackung.

Die Erfindung wird im Folgenden an einigen Ausführungsbeispielen an Hand der beigefügten Zeichnung näher erläutert werden. Es stellt dar:
- Fig. 1 einen: Längsschnitt durch eine Anlage, bei welcher die erfindungsgemäße Dichtschnur in einer Dichtungspackung zum Einsatz kommt; und
- Fig. 2a-2f: Ausführungsbeispiele für die Anordnung von Druckkammern und die Zu- bzw. Abfuhr von Druckfluid in diese bzw. aus diesen Druckkammern.

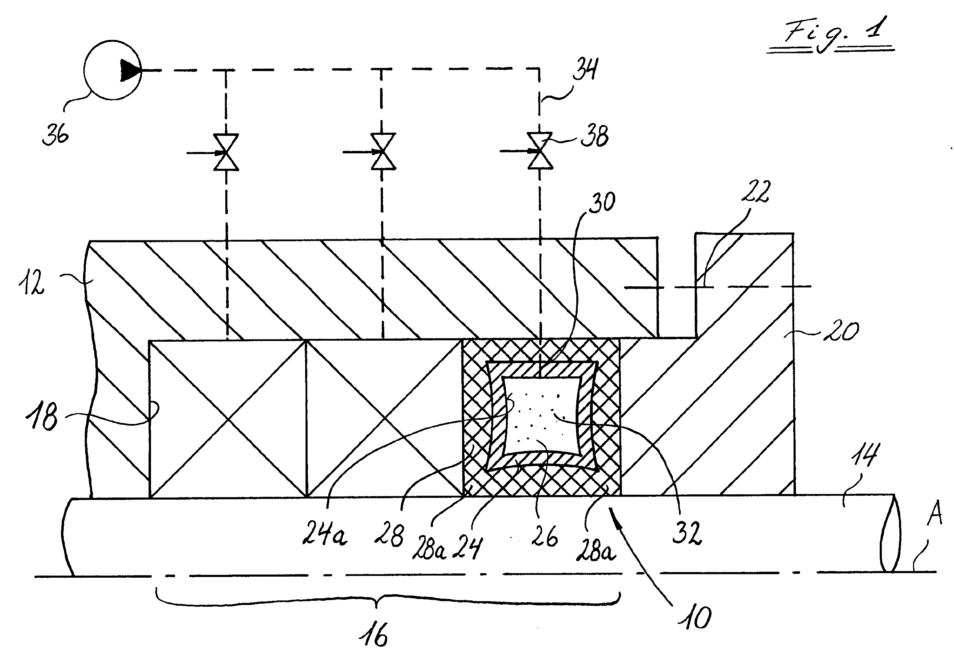

In Fig. 1 ist also ein Beispiel für eine Anlage, bei welcher die erfindungsgemäße Dichtschnur 10 zum Einsatz kommen kann, eine sich um die Achse A drehende und in einem Lager 12 gelagerte Welle 14 dargestellt. Die Dichtschnur 10 ist Teil einer Dichtungspackung 16, welche in dem dargestellten Ausführungsbeispiel drei in axialer Richtung hintereinander angeordnete Dichtschnüre 10 umfasst, wobei lediglich der Querschnitt der in Fig. 1 rechtesten Dichtschnur 10 detailliert dargestellt ist, während die beiden anderen Dichtschnüre grobschematisch als durchkreuzte Quadrate angedeutet sind. Die drei Dichtschnüre 10 sind in einem Packungsraum 18 aufgenommen, der in dem Wellenlager 12 ausgebildet ist. Der Packungsraum 18 ist in Fig. 1 nach rechts durch ein Deckelelement 20 verschlossen, welches an dem Wellenlager 12 beispielsweise mittels Schraubbolzen 22 befestigt sein kann.

Die Dichtschnur 10 umfasst einen Kern 24, der als elastisch verformbares Hohlprofil mit einem sich in Längsrichtung der Dichtschnur 10 erstreckenden länglichen Hohlraum 26 ausgebildet ist. Dieser elastisch verformbare Kern 24 ist in eine Umflechtung 28 eingebettet, wie sie grundsätzlich bereits aus der DE-A-195 32 795 bekannt ist, deren Offenbarung hiermit bezüglich des grundlegenden Aufbaus der Dichtschnur in Bezug genommen wird.

Im Unterschied zu der aus dieser Druckschrift bekannten Dichtschnur umfasst der elastisch verformbare Kern 24 einen in Fig. 1 lediglich schematisch angedeuteten Anschluss 30, über den ein Druckfluid 32 in den als Druckkammer dienenden Hohlraum 26 eingeleitet werden kann. Unter der auf seine innere Begrenzungswand 24a einwirkenden Druckkraft expandiert das elastisch verformbare Hohlprofil 24 und drängt somit die es umgebende Umflechtung 28 in dichtende Anlage gegen die Welle 14, das Wellenlager 12, die benachbarten Dichtschnüre und ggf. das Deckelteil 20. In der Ausführungsform gemäß Fig. 1 sind die der benachbarten Dichtschnur, der Welle 14 und dem Deckelteil 20 zugewandten Abschnitte der Begrenzungswand 24a zur Druckkammer 26 hin konvex ausgebildet. In Folge dessen strecken sich diese Wandungsabschnitte bei Expansion des Hohlprofils 24, wodurch die Dichtwirkung besonders in den dichtkritischen Ecken 28a der Umflechtung 28 verstärkt wird.

Das Druckfluid 32 wird der Druckkammer 26 von einer Pumpe 36 über eine Zuführleitung 34 zugeführt. Dabei kann die Zuführmenge über ein verstellbares Ventil 38 beeinflusst werden, das Teil einer nicht im Einzelnen dargestellten Steuerung ist. Entsprechende Ventile und Zuführleitungen sind auch für die beiden anderen Dichtschnüre der Ausführungsform gemäß Fig. 1 vorgesehen.

Da erfindungsgemäß somit allen Dichtschnüren Druckfluid zugeführt werden kann, können auch alle Dichtschnüre 10 in gleicher Weise zur Abdichtung beitragen. Somit kann der bei herkömmlichen Dichtungspackungen übliche Abfall der Dichtungswirkung von der in Fig. 1 rechtesten Dichtschnur hin zu der in Fig. 1 linkesten Dichtschnur vermieden werden.

Grundsätzlich könnte der Druck des den Dichtschnüren von der Pumpe 36 zugeführten Druckfluids 32 mittels eines einzigen Ventils 38 eingestellt werden. Das Vorsehen jeweils eines gesonderten Ventils 38 für jede der Dichtschnüre 10 hat jedoch den Vorteil, dass gewünschten- oder auch erforderlichenfalls ein sich in Richtung der Achse A veränderndes Druckprofil eingestellt werden kann.

Zusätzlich kann bei Abrieb der Umflechtung 28 an deren der Welle 14 zugewandter Fläche dieser Verschleiß in einfacher Weise durch Erhöhung des Fluiddrucks ausgeglichen werden.

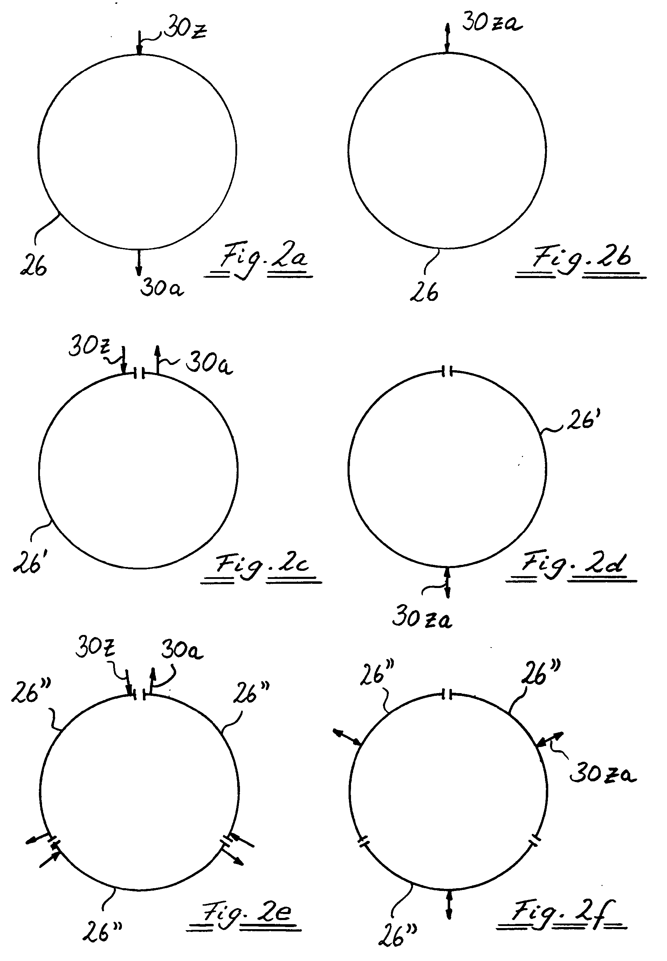

Wie in Fig. 2a dargestellt ist, ist es vorteilhaft, wenn bei einer in sich geschlossenen ringförmigen Druckkammer 26 für die Zufuhr und Abfuhr von Druckfluid jeweils gesonderte Anschlüsse 30z (Zufuhr) und 30a (Abfuhr) vorgesehen sind. Grundsätzlich ist es jedoch auch möglich, nur einen einzigen Anschluss 30za vorzusehen, der sowohl zur Zufuhr als auch zur Abfuhr von Druckfluid dient (Fig. 2b). Wie in den Fig. 2c und 2d dargestellt ist, gilt dies in entsprechender Weise auch dann, wenn die grundsätzlich ringförmige Druckkammer 26' nicht als in sich geschlossene, unendliche Ringkammer ausgebildet ist. Schließlich können gemäß Fig. 2e und 2f auch eine Mehrzahl von Druckkammern 26" vorgesehen sein, die gemeinsam die Welle 14 umschließen und jeweils mit gesonderten Anschlüssen 30z zur Zufuhr und 30a zur Abfuhr von Druckfluid bzw. einem gemeinsamen Anschluss 30za zur Zufuhr und Abfuhr von Druckfluid ausgestattet sein können.

## Patentansprüche

1. Dichtschnur (10) zur Abdichtung von Wellen (14) oder anderen bewegbaren Maschinen- und Anlagenteilen, wie Schieber, Klappen, Gehäuse und dergleichen, insbesondere bei Rührwerken, Mischern, Trocknern, Filtern und Deckelabdichtungen mit einem ein elastisch verformbares Hohlprofil (26) aufweisenden Kern (24), wobei das Hohlprofil (26) wenigstens eine Kammer (26) umfasst, und mit einer den Kern (24) umschließenden Umflechtung (28),
**dadurch gekennzeichnet, dass** die wenigstens eine Kammer (26) mit wenigstens einem Anschluss (30) zur Zufuhr oder/und Abfuhr von Druckfluid (32) ausgestattet ist.

2. Dichtschnur nach Anspruch 1,
**dadurch gekennzeichnet, dass** die Begrenzungswandung (24a) der wenigstens einen Druckkammer (26) in einem im Wesentlichen orthogonalen Querschnitt zumindest abschnittsweise zur Druckkammer (26) hin konvex ist.

3. Dichtschnur nach Anspruch 1 oder 2,
**dadurch gekennzeichnet, dass** über den Querschnitt der Dichtschnur (10) eine Mehrzahl von Druckkammern (26) verteilt angeordnet ist.

4. Dichtschnur nach einem der Ansprüche 1 bis 3,
**dadurch gekennzeichnet, dass** dann, wenn die Dichtschnur (10) einen in sich geschlossenen, endlosen Verlauf nimmt, die wenigstens eine Kammer (26) eine in sich geschlossene Ringkammer (26) ist.

5. Dichtschnur nach einem der Ansprüche 1 bis 3,
**dadurch gekennzeichnet, dass** dann, wenn die Dichtschnur (10) einen in sich geschlossenen, endlosen Verlauf nimmt, längs dieses Verlaufs eine Mehrzahl von separaten Kammern (26") vorgesehen ist.

6. Dichtschnur nach einem der Ansprüche 1 bis 5,
**dadurch gekennzeichnet, dass** die wenigstens eine Druckkammer (26) zur Zufuhr und Abfuhr von Druckfluid (32) einen gemeinsamen Anschluss (30za) aufweist.

7. Dichtschnur nach einem der Ansprüche 1 bis 5,
**dadurch gekennzeichnet, dass** die wenigstens eine Druckkammer (26) zur Zufuhr und Abfuhr von Druckfluid (32) jeweils einen gesonderten Anschluss (30a, 30z) aufweist.

8. Dichtschnur nach Anspruch 7,
**dadurch gekennzeichnet, dass** das Druckfluid (32) gleichzeitig als Kühlfluid dient.

9. Dichtschnur nach einem der Ansprüche 1 bis 8,
**dadurch gekennzeichnet, dass** ihr eine Pumpe (36) zugeordnet ist, welche der wenigstens einen Druckkammer (26) das Druckfluid (32) unter Druck zuführt.

10. Dichtschnur nach einem der Ansprüche 1 bis 9,
**dadurch gekennzeichnet, dass** ihr zur Steuerung der Zufuhr oder/und Abfuhr von Druckfluid (32) Ventile (38) umfassende Steuerungsmittel zugeordnet sind.

11. Dichtschnur nach einem der Ansprüche 1 bis 10,
**dadurch gekennzeichnet, dass** das Druckfluid (32) Stickstoffgas ist.

12. Dichtschnur nach einem der Ansprüche 1 bis 11,
**dadurch gekennzeichnet, dass** das elastisch verformbare Hohlprofil (24) aus Silicon oder/und EPDM oder/und Viton oder/und Polyethylen oder/und Polypropylen oder/und Polytetrafluorethylen gefertigt ist.

13. Eine Mehrzahl von Dichtschnüren (10) nach einem der vorhergehenden Ansprüche umfassende Dichtungspackung (16).
